# NOUVEAU FASCICULE DE BREVET EUROPEEN

(11) **EP 1 255 786 B2**
(45) Date de publication et mention de la décision concernant l'opposition: **08.10.2008**
(45) Mention de la délivrance du brevet: 16.03.2005
(21) Numéro de dépôt: 01907663.7
(22) Date de dépôt: 22.01.2001
(51) Int. Cl.: C08J 3/215, C08J 3/22, B01D 12/00

(54) **PROCEDE DE PREPARATION DE MELANGES-MAITRES A BASE DE POLYMERE ET DE PARTICULES MINERALES ET MELANGES-MAITRES AINSI OBTENUS**
VERFAHREN ZUR HERSTELLUNG EINER VORMISCHUNG AUF DER BASIS VON POLYMEREN UND MINERALISCHEN PARTIKELN SOWIE DIE DERART ERHALTENE VORMISCHUNG
METHOD FOR PREPARING MASTERBATCHES BASED ON POLYMERS AND MINERAL PARTICLES AND RESULTING MASTERBATCHES

(30) Priorité: 24.01.2000 FR 0001365
(43) Date de publication de la demande: 13.11.2002
(73) Titulaire: RHODIA CHIMIE, 92512 Boulogne Billancourt Cedex (FR)
(72) Inventeur: LABARRE, Dominique, F-92200 Neuilly sur Seine (FR); LANNIBOIS-DREAN, Hélène, F-94220 Charenton le Po (FR); DE LANTY, Patrick, 92340 Bourg la Reine (FR); DERUELLE, Martial, F-69390 Millery (FR)
(74) Mandataire: Delenne, Marc
(86) Numéro de dépôt international: PCT/FR2001/000201
(87) Numéro de publication internationale: WO 2001/053386

(56) Documents cités:
- EP-A- 0 849 320
- EP-A- 0 890 600
- WO-A-99/15583
- CA-A- 2 216 062
- CA-A- 2 277 401
- DE-A- 19 512 551
- DE-A- 19 814 839
- FR-A- 2 588 874
- GB-A- 1 116 207
- US-A- 3 700 621
- US-A- 4 912 151

## Description

La présente invention est relative à un procédé de préparation de mélanges-maîtres à base d'au moins un polymère et de particules de silice de précipitation, utilisables pour la préparation de vulcanisats de caoutchouc, notamment dans le cadre de l'élaboration d'enveloppes de pneumatique, en particulier les flancs et surtout la bande de roulement de pneumatique, semelles de chaussure, revêtements de sols, gaines, câbles et courroies de transmission ...

On a cherché depuis longtemps à réaliser des mélanges-maîtres ("masterbatches") à base de polymère et de charge, notamment de silice (US-A-3700690, US-A-3840382).

Il existe aujourd'hui deux grandes voies d'obtention de mélanges-maîtres.

La première voie est la voie dite "physique" (ou "dry masterbatch") ; elle consiste en une simple opération de prémélange mécanique des matières premières dans une extrudeuse ou un mélangeur interne ; cette voie physique, utilisée couramment dans l'industrie des plastiques, l'est également chez certains fabricants de caoutchouc pour des mélanges à base de noir de carbone.

La seconde voie est la voie dite "humide" (ou "wet masterbatch") ; elle consiste à mélanger les matières premières en utilisant une solution aqueuse ou organique de polymère et une suspension aqueuse de charge, notamment de silice (US-A-4788231, US-A-5763388, WO 98/53004, WO 99/15583), une étape de coagulation étant également le plus souvent mise en oeuvre.

Cependant, l'état de dispersion de la silice dans les mélanges-maîtres obtenus à l'issu des différents procédés de coagulation est généralement peu satisfaisant, ce qui implique au minimum de malaxer à nouveau ces mélanges-maîtres dans un mélangeur interne du type Banbury ou une extrudeuse ayant un pouvoir dispersant équivalent à ce type de mélangeur interne.

De plus, les procédés correspondant à cette seconde voie privilégient l'utilisation d'élastomères polymérisés en émulsion ; or, les élastomères synthétisés en émulsion sont en général constitués de latex de taille supérieure au micron, c'est-à-dire d'une taille très supérieure à la distance théorique séparant deux agrégats de silice de précipitation dans un mélange-maître élastomère / silice de précipitation : les mélanges-maîtres alors obtenus ne pourront pas présenter une répartition homogène (au sens distance entre objet) ou un bon état de dispersion de la silice.

Enfin, dans les quelques procédés faisant appel à des élastomères polymérisés en solution, est habituellement mise en oeuvre une étape de mélange entre une solution organique (pour l'élastomère) et une suspension aqueuse (pour la silice par exemple), ce qui ne favorise guère l'homogénéité du produit final (phénomènes de floculation, d'émulsion).

La présente invention a pour but de fournir une alternative aux procédés connus de préparation des mélanges-maîtres et qui, de préférence, ne présente pas les inconvénients mentionnés ci-dessus.

De plus, les vulcanisats obtenus à partir des mélanges-maîtres susceptibles d'être préparés par le procédé selon l'invention présentent, sans mise en oeuvre d'étape de malaxage dans un mélangeur interne par exemple du type Banbury, un compromis de propriétés, notamment mécaniques, rhéologiques et/ou dynamiques très satisfaisant, et généralement au moins aussi bon, notamment dans le cas des caractéristiques en traction, que le compromis de propriétés obtenues pour le vulcanisat élaboré par la voie classique comprenant le malaxage en mélangeur interne du polymère et des particules de silice de précipitation.

Ainsi, l'invention a pour objet un procédé de préparation d'un mélange maître à base d'au moins un polymère et de particules de silice de précipitation, dans lequel :
- on prépare une suspension de particules de silice de précipitation dans un solvant organique à partir d'une dispersion ou suspension aqueuse desdites particules de silice de précipitation, par transfert desdites particules de la phase aqueuse vers la phase organique à l'aide d'au moins un agent de transfert,
- on mélange en général sous agitation, au moins un polymère en solution dans un solvant organique avec ladite suspension de particules de silice de précipitation dans un solvant organique.

A l'issue de l'opération de mélange, on peut éliminer le (ou les) solvant(s) organique(s), notamment par séchage, évaporation (par exemple par entraînement à la vapeur). On peut également effectuer une étape finale de mise en forme du solide obtenu.

L'opération de mélange est en général effectuée à une température comprise entre 10 et 80 °C, par exemple entre 15 et 35 °C.

A l'issue de l'opération de mélange, le (ou les) solvant(s) organique(s) peut (peuvent) être recyclé(s), après séparation, vers une étape de préparation de la solution organique de polymère et/ou vers une étape de préparation de la suspension organique de particules de silice de précipitation.

La solution organique de polymère peut être issue de la dissolution du polymère solide dans le solvant organique. Cependant, elle est issue préférentiellement de la polymérisation des monomères correspondants dans le solvant organique ; on emploie ainsi de préférence dans le procédé selon l'invention un ou des polymères obtenus par polymérisation en solution.

De plus, de manière avantageuse, le solvant organique dans lequel le polymère est en solution est identique au solvant organique dans lequel les particules de silice de précipitation sont en suspension.

On met généralement en oeuvre une suspension organique présentant une teneur en particules de silice de précipitation comprise entre 1 et 30 %, en particulier entre 5 et 20 %, et par exemple entre 5 et 15 %, en masse.

De même, la teneur en polymère de la solution organique employée est habituellement comprise entre 5 et 30 % en masse.

Les quantités de matières premières utilisées sont telles que le mélange-maître préparé contient en général de 10 à 150 parties, de préférence de 25 à 100 parties, et en particulier de 40 à 75 parties, de particules de silice de précipitation pour 100 parties de polymère.

Dans le cadre de l'invention, par "polymère" on entend également "copolymère".

Le polymère utilisé est en général un élastomère.

Il présente, en général, au moins une température de transition vitreuse comprise entre -150 et +300 °C, en particulier entre -150 et +20 °C.

A titre de polymères possibles, on peut citer, notamment, les polymères diéniques, en particulier les élastomères diéniques.

Par exemple, on peut citer le caoutchouc naturel, les polymères dérivant de monomères aliphatiques ou aromatiques, comprenant au moins une insaturation (tels que, notamment, l'éthylène, le propylène, le butadiène, l'isoprène, le styrène), le polyacrylate de butyle, les élastomères silicones, les élastomères thermoplastiques, les élastomères fonctionnalisés, les polymères halogénés, et leurs mélanges.

Le polymère employé peut être l'EPDM. De manière préférée, on emploie un SBR (copolymère styrène butadiène) ou/et un BR (polybutadiène).

On peut mettre en oeuvre au moins deux polymères différents.

Les particules de silice de précipitation employées dans le cadre de l'invention sont en général anioniques. Cependant, elles peuvent subir, préalablement à leur emploi, un traitement de surface, notamment pour les rendre cationiques (cationisation), par exemple par un dopage à l'aluminium.

Les particules de silice de précipitation préférentiellement employées dans la présente invention consistent en une charge connue ou utilisable pour le renforcement des compositions de polymère.

Préalablement au mélange avec la solution organique de polymère, on peut ajouter à la suspension organique de particules de silice de précipitation au moins un produit organique permettant d'apporter une fonctionnalité auxdites particules ; on peut en particulier ajouter un agent de couplage, un agent de recouvrement et/ou un agent anti-oxydant ; de préférence, on ajoute au moins l'agent de couplage.

La suspension organique de particules de silice de précipitation est préparée à partir d'une dispersion ou suspension aqueuse desdites particules, par transfert desdites particules de la phase aqueuse vers la phase organique à l'aide d'au moins un agent de transfert.

Plus particulièrement, la suspension de particules de silice de précipitation dans un solvant organique est préparée comme suit :
a) on mélange, à une dispersion ou suspension aqueuse de particules de silice de précipitation, un solvant organique non-miscible à l'eau et un agent de transfert, soluble partiellement ou de préférence totalement dans ledit solvant organique, ledit agent de transfert étant ajouté de manière à diminuer l'hydrophilie desdites particules de silice de précipitation et à provoquer ainsi leur transfert (passage) dans ledit solvant organique,
b) on sépare le solvant organique contenant lesdites particules de silice de précipitation, de la phase aqueuse.

De manière très avantageuse, le transfert est direct, c'est-à-dire qu'il n'est pas fait appel à une étape de séchage.

Dans l'étape a), on peut éventuellement ajouter d'abord le solvant organique à ladite dispersion ou suspension aqueuse, puis introduire l'agent de transfert.

Cependant, dans l'étape a), on préfère mélanger plutôt la dispersion ou suspension aqueuse de particules de silice de précipitation avec le solvant organique non-miscible à l'eau dans lequel a été préalablement introduit l'agent de transfert ; ainsi, préalablement au mélange, l'agent de transfert est solubilisé partiellement ou de préférence totalement dans le solvant organique.

L'opération de mélange de l'étape a) s'effectue en général sous agitation.

Le passage des particules de silice de précipitation de la phase aqueuse vers la phase organique se fait à l'aide de l'agent de transfert qui se fixe en surface des particules de silice de précipitation.

La force ionique de la dispersion ou suspension aqueuse de particules de silice de précipitation peut varier par exemple entre 0 et 3.

Le solvant organique présente plutôt une polarité faible ; il possède ainsi, dans le système de C.M. Hansen, un paramètre de polarité δp habituellement inférieur à 10 (J/cm³)^{½}, par exemple inférieur à 7 (J/cm³)^{½}.

La dispersion ou suspension aqueuse de particules de silice de précipitation présente généralement un pH correspondant à un taux de recouvrement desdites particules en agent de transfert optimal. Le pH est ainsi de préférence compris entre 3 et 11. II peut être compris entre 7,5 et 10,5, par exemple entre 8 et 10. Le pH peut être compris entre 3 et 5 notamment lorsque les particules de silice de précipitation ont préalablement subi une cationisation.

De préférence, l'agent de transfert doit être plus soluble dans la phase organique que dans la phase aqueuse.

L'agent de transfert utilisé est habituellement un tensioactif, notamment un tensioactif ionique ou non ionique, comprenant préférentiellement au moins deux chaînes hydrophobes.

On peut employer un tensioactif cationique, par exemple lorsque les particules de silice de précipitation sont anioniques ou, dans le cas où elles ont été rendues globalement cationiques par un traitement spécifique, lorsqu'elles possèdent encore suffisamment de sites anioniques. L'agent de transfert peut ainsi être une amine quaternaire ou un sel d'amine quaternaire. A titre d'exemples de tensioactifs cationiques, on peut citer les sels d'alkylammonium de formule R¹R²R³R⁴N⁺X⁻ dans laquelle :
- X⁻ représente un ion halogène, CH₂SO₄⁻ ou C₂H₅SO₄⁻,
- R¹ et R² sont identiques ou différents et représentent un radical alkyle en C₁-C₂₀, un radical aryle ou benzyle,
- R³ et R⁴ sont identiques ou différents et représentent un radical alkyle en C₁-C₂₀, un radical aryle ou benzyle, ou un condensat oxyde d'éthylène et/ou de propylène (CH₂CH₂O)ₓ- (CH₂CHCH₃O)_{y}-H, où x et y sont compris entre 0 et 30 et ne sont jamais nuls ensemble.

On peut citer notamment le chlorure de méthyl trioctyl ammonium.

On peut employer un tensioactif anionique, par exemple lorsque les particules de silice de précipitation ont été rendues globalement cationiques par un traitement spécifique (cationisation), de préférence par un dopage à l'aluminium. A titre d'exemples de tensioactifs anioniques, on peut citer :
- les alkylesters sulfonates de formule R-CH(SO₃M)-COOR', où R représente en radical alkyle en C₈-C₂₀, en particulier en C₁₀-C₁₆, R' un radical alkyle en C₁-C₆, en particulier en C₁-C₃ et M un cation alcalin (notamment sodium, potassium, lithium), ammonium substitué ou non (méthyl-, diméthyl-, triméthyl-, tétraméthylammonium, diméthylpipéridinium ...) ou dérivé d'une alcanolamine (monoéthanolamine, diéthanolamine, triéthanolamine ...), lesdits alkylesters sulfonates étant de préférence des méthyl ester sulfonates dont les radicaux R sont en C₁₄-C₁₆ ;
- les alkylsulfates de formule ROSO₃M, où R représente un radical alkyle ou hydroxyalkyle en C₅-C₂₄, en particulier en C₁₀-C₁₈, M représentant un atome d'hydrogène ou un cation tel que défini ci-dessus, ainsi que leurs dérivés éthoxylénés (OE) et/ou propoxylénés (OP), possédant en moyenne entre 0,5 et 30, en particulier entre 0,5 et 10, motifs OE et/ou OP ;
- les alkylamides sulfatés de formule RCONHR'OSO₃M où R représente un radical alkyle en C₂-C₂₂, en particulier en C₆-C₂₀, R' un radical alkyle en C₂-C₃, M un atome d'hydrogène ou un cation tel que défini ci-dessus, ainsi que leurs dérivés éthoxylénés (OE) et/ou propoxylénés (OP), possédant en moyenne entre 0,5 et 60 motifs OE et/ou OP ;
- les sels d'acides gras saturés ou insaturés en C₈-C₂₄, en particulier en C₁₄-C₂₀, les alkylbenzènesulfonates en C₉-C₂₀, les alkylsulfonates primaires ou secondaires en C₈-C₂₂, les alkylglycérol sulfonates, des acides polycarboxyliques sulfonés, les sulfonates de paraffine, les N-acyl N-alkyltaurates, les alkylphophates, les alkyliséthionates, les alkylsuccinamates, les alkylsulfosuccinates, les monoesters ou diesters de sulfosuccinates, les N-acyl sarcosinates, les sulfates d'alkylglycosides, les polyéthoxycarboxylates, le cation étant un métal alcalin (notamment sodium, potassium, lithium), un reste ammonium substitué ou non (méthyl-, diméthyl-, triméthyl-, tétraméthylammonium, diméthylpipéridinium) ou dérivé d'une alcanolamine (monoéthanolamine, diéthanolamine, triéthanolamine ...).

On peut citer notamment le dioctylsulfosuccinate de sodium.

On peut éventuellement employer un tensioactif non ionique ; on peut notamment citer :
- les alkylphénols polyoxyalkylénés (notamment polyoxyéthylénés, polyoxypropylénés, polyoxybutylénés), dont le substituant alkyle est en C₆-C₁₂ et contenant entre 5 et 25 motifs alkylènes ;
- les glucosamide, glucamide, glycérolamide ;
- les alcools aliphatiques en C₈-C₂₂ polyoxyalkylénés contenant entre 1 et 25 motifs oxyalkylènes (notamment oxyéthylène, oxypropylène) ;
- les produits résultant de la condensation de l'oxyde d'éthylène et le composé résultant de la condensation de l'oxyde de propylène avec le propylène glycol ;
- les produits résultant de la condensation de l'oxyde d'éthylène et le composé résultant de la condensation de l'oxyde de propylène avec l'éthylènediamine ;
- les polysiloxanes portant des fonctions polyéthers ;
- les oxydes d'amines tels que les oxydes d'alkyl C₁₀-C₁₈ diméthylamines, les oxydes d'alcoxy C₈-C₂₂ éthyl dihydroxy éthylamines ;
- les amides d'acides gras en C₈-C₂₀ ;
- les acides gras éthoxylés ;
- les amides gras éthoxylés ;
- les amines éthoxylées.

On peut citer à titre de tensioactif non ionique les silanes (alcoxy ou chloro) possédant au moins une chaîne hydrocarbonée hydrophobe.

L'agent de transfert utilisé peut consister en un mélange contenant, d'une part, majoritairement un tensioactif non ionique, et, d'autre part, un tensioactif ionique.

En général, on met en oeuvre dans l'étape a) une quantité d'agent de transfert permettant de former une couche monomoléculaire en surface des particules de silice de précipitation. Par exemple, notamment dans le cas d'une dispersion ou suspension aqueuse de silice de précipitation présentant un pH compris entre 7,5 et 10,5, en particulier entre 8 et 10, la quantité d'agent de transfert peut être comprise entre 10 et 20 %, en particulier entre 12 et 17 %, en masse par rapport à la masse de silice.

On peut employer dans l'étape a) une dispersion ou suspension aqueuse présentant une teneur en particules de silice de précipitation comprise entre 1 et 30 %, en particulier entre 5 et 15 %, en masse.

De même, en général, on met en oeuvre dans l'étape a) un volume de solvant organique tel que la suspension organique de particules de silice de précipitation obtenue reste coulable après le transfert.

Un agent co-tensioactif peut éventuellement être employé en plus de l'agent de transfert, notamment pour diminuer la tension interfaciale eau - solvant organique ; on peut par exemple utiliser une petite quantité d'un alcool lourd, tel que l'octanol ou le nonanol.

De préférence, l'état de dispersion des particules de silice de précipitation est au moins aussi bon dans le solvant organique que dans la phase aqueuse de départ.

Le solvant organique, contenant les particules de silice de précipitation, obtenu à partir de la dispersion ou suspension aqueuse de particules de silice de précipitation peut ensuite être éventuellement soumis à un traitement aux ultra-sons.

Le(s) solvant(s) organique(s) utilisé(s) dans le cadre de la présente invention est (sont) choisi(s) parmi les hydrocarbures aromatiques et les hydrocarbures aliphatiques éventuellement substitués. On peut citer notamment le xylène, le benzène et le toluène.

Dans l'invention on utilise en particulier des particules de silice de précipitation ayant une aptitude élevée à la dispersion en milieu polymère, en particulier dans les élastomères.

Comme indiqué plus haut, ladite silice de précipitation peut avoir subi une cationisation, de préférence à l'aide d'un dopage à l'aluminium.

La dispersion ou suspension aqueuse de silice de précipitation, à partir de laquelle est préparée la suspension organique de silice de précipitation employée dans l'invention, a été de préférence obtenue au cours du procédé de préparation de ladite silice, le pH de ladite suspension ayant été éventuellement ensuite ajustée à une valeur permettant d'obtenir un taux optimal de recouvrement des particules de silice de précipitation en agent de transfert. Cette valeur de pH est de préférence comprise entre 3 et 11. Elle peut ainsi être comprise entre 7,5 et 10,5, par exemple entre 8 et 10. Elle peut également être comprise entre 3 et 5 lorsque la silice de précipitation a subi une cationisation.

De plus, et cela constitue un autre avantage de l'invention, cette dispersion ou suspension aqueuse de silice de précipitation a été préférentiellement obtenue non seulement sans mettre en oeuvre d'étape de séchage, mais sans mettre en oeuvre d'étape de lavage et/ou d'étape de filtration, qui ont une action de compaction qui pénalise le plus souvent la dispersibilité finale de la silice dans le polymère.

La dispersion ou suspension aqueuse de silice de précipitation, à partir de laquelle est préparée la suspension organique de silice de précipitation employée dans l'invention, peut être issue des procédés décrits dans les demandes EP 0520862, WO 95109127, WO 95109128, WO 98/54090.

Les particules de silice de précipitation utilisables dans le cadre de l'invention peuvent présenter une surface spécifique CTAB comprise entre 40 et 400 m²/g, notamment entre 50 et 240 m²/g, en particulier entre 100 et 240 m²/g ; elle peut être ainsi comprise entre 140 et 240 m²/g, par exemple entre 140 et 200 m²/g. La surface spécifique CTAB est la surface externe déterminée selon la norme NF T 45007 (novembre 1987 - 5.12).

Les mélanges-maîtres à base d'au moins un polymère et de particules de silice de précipitation, susceptibles d'être obtenus par le procédé exposé précédemment se présentent de préférence sous forme de poudre.

De préférence, les particules de silice de précipitation présentent une dispersibilité élevée dans le mélange-maître obtenu ; de plus, celle-ci est, de manière avantageuse, sensiblement identique à celle souhaitée dans le vulcanisat final.

Ces mélanges-maîtres sont utilisables dans un vulcanisat de caoutchouc ; on emploie alors tout système de vulcanisation connu. Les vulcanisats obtenus présentent de préférence des propriétés tout à fait satisfaisantes.

A titre d'exemples d'articles finis à base desdits mélanges-maîtres ou desdits vulcanisats, on peut citer les enveloppes de pneumatique, en particulier les flancs et surtout les bandes de roulement de pneumatique, les semelles de chaussure, les revêtements de sols, les gaines, les câbles et les courroies de transmission.

D'autres avantages de l'invention résident notamment dans le fait qu'elle peut permettre, lors de l'élaboration de vulcanisats à partir de mélanges-maîtres :
- de diminuer sensiblement le temps de l'étape de malaxage dans le mélangeur interne, par exemple du type Banbury, Brabender, d'où une économie de coût du malaxage,
- voire même de supprimer cette étape de malaxage en discontinu dans un mélangeur interne, et donc d'accéder à un procédé en continu, par exemple de type extrudeuse, d'où une simplification du procédé et un gain de capacité.

De plus, les processus thermiques rencontrés lors de l'étape de malaxage peuvent donc être au moins limités. Par exemple, la silice de précipitation étant déjà de préférence bien dispersée dans le polymère du mélange-maître, les énergies traditionnellement nécessaires pour la disperser lors de l'étape de malaxage dans le mélangeur interne sont moindres ; ainsi, cela peut permettre d'employer maintenant des agents de couplage jusqu'ici trop réactifs aux fluctuations thermiques de l'étape de malaxage en mélangeur interne.

### EXEMPLE 1

On prépare dans cet exemple une suspension à 10 % en masse de silice de précipitation dans du xylène.
a) D'une part, on met en oeuvre une suspension aqueuse de silice de précipitation correspondant à la bouillie de silice précipitée obtenue, juste avant l'étape de filtration/lavage, dans l'exemple 1 de la demande de brevet EP 0520862. Cette suspension aqueuse contient 5,7 % en masse de silice de précipitation et possède un pH égal à 5. Le pH de cette suspension est ensuite ajustée à une valeur de 9 par addition de soude 1 M, à température ambiante.
b) D'autre part, on mélange 3,8 g de chlorure de méthyl trioctyl ammonium avec 316,3 g de xylène.
c) On verse ensuite dans une ampoule à décanter la solution obtenue en b) puis 620 g de suspension aqueuse obtenue en a). On soumet le mélange obtenu à une agitation.

Les étapes b) et c) sont réalisées à température ambiante.

On constate que le transfert de la silice de précipitation de la phase aqueuse vers la phase organique est immédiat.

On récupère ainsi 355,2 g de suspension à 10 % en masse de silice de précipitation dans du xylène.

Cette suspension organique de silice de précipitation est ensuite soumise à un traitement aux ultra-sons, dans une sonde à ultrasons Vibra Cell VC600 (commercialisée par la société Sonics & Materials Inc.), équipée d'une microsonde à la puissance 5, le traitement étant effectué en continu pendant 15 minutes, tout en évitant de surchauffer la suspension organique.

La suspension à 10 % en masse de silice de précipitation dans du xylène ainsi obtenue est référencée S.

### EXEMPLE 2

a) On ajoute, à 335,8 g de la suspension S obtenue à l'issue de l'exemple 1, 2,6 g de Si69, c'est-à-dire de bis(triéthoxysilylpropyl)tétrasulfure (agent de couplage charge/polymère commercialisé par la société Dégussa) ; le milieu obtenu est soumis à une agitation. La suspension ainsi préparée est référencée S1.
b) On ajoute 350 g d'un élastomère SBR (copolymère styrène butadiène) de type Buna VSL 5525-0 (commercialisé par la société Bayer) à 1400 g de xylène; le mélange obtenu est soumis à une agitation, dans un récipient fermé, pendant environ 48 heures. La solution à 20 % en masse de SBR dans du xylène ainsi préparée est référencée E.
c) On mélange sous agitation 338,4 g de suspension S1 avec 342,0 g de solution E.
d) Le produit obtenu est ensuite versé dans un récipient tel que l'on dispose d'une grande surface de contact avec l'air favorisant l'évaporation ; on laisse le solvant organique s'évaporer sous hotte pendant une nuit.

Les étapes a) à d) sont réalisées à température ambiante.

On obtient à l'issue de l'étape d) un mélange-maître référencé M1 contenant 50 parties en poids de silice de précipitation et 4 parties en poids d'agent de couplage Si69 pour 100 parties en poids de SBR.

### EXEMPLE 3

On mélange dans un mélangeur à cylindre le mélange-maître M1 et les composés suivants (proportions indiquées en parties, en poids pour 154 parties, en poids de mélange-maître M1) :

| | |
|---|---|
| Diphénylguanidine | 1,4 |
| Acide stéarique | 1,1 |
| Oxyde de zinc | 1,8 |
| Sulfénamide ⁽¹⁾ | 1,3 |
| Soufre | 1,4 |

| | |
|---|---|
| ((1) : N-cyclohexyl-2-benzothiazyl sulfénamide) | |

Le mélange obtenu est ensuite vulcanisé à 170 °C pendant 40 minutes.

Le vulcanisat ainsi préparé est référencé VM1.

### EXEMPLE 4

On mesure les propriétés mécaniques, en particulier les propriétés en traction (500 mm/min), du vulcanisat VM1 préparé à partir du mélange-maître M1 sans utiliser une étape de malaxage dans un mélangeur interne et on les compare à celles d'un vulcanisat, référencé V1, préparé de manière classique, c'est-à-dire en mettant en oeuvre une étape de malaxage dans un mélangeur interne.
a) On prépare le vulcanisat V1 comme suit.
On utilise la composition d'élastomère ci-dessous (proportions indiquées en parties, en poids) :

| | |
|---|---|
| SBR ⁽¹⁾ | 100 |
| Silice de précipitation ⁽²⁾ | 50 |
| Agent de couplage Si69 | 4 |
| Diphénylguanidine | 1,4 |
| Acide stéarique | 1,1 |
| Oxyde de zinc | 1,8 |
| Sulfénamide ⁽³⁾ | 1,3 |
| Soufre | 1,4 |

| | |
|---|---|
| (1) : copolymère styrène butadiène de type Buna VSL 5525-0 (2) : silice de précipitation obtenue à l'issue de l'exemple 12 de la demande de brevet EP 0520862 (à partir de la bouillie de silice précipitée obtenue dans l'exemple 1 de la demande de brevet EP 0520862) (3) : N-cyclohexyl-2-benzothiazyl sulfénamide | |

Cette composition est préparée par un travail thermo-mécanique dans un mélangeur (malaxeur) interne, en deux étapes, avec une vitesse moyenne des palettes de 80 tours/minute, jusqu'à l'obtention d'une température de 120 °C à la fin de chaque étape, ces étapes étant suivies d'une étape de finition réalisée sur un mélangeur à cylindre.
Le mélange obtenu est ensuite vulcanisé à 170 °C pendant 40 minutes.
b) Les propriétés des vulcanisats VM1 et V1 sont exposées ci-après, les mesures (modules, déformation rupture, contrainte rupture) ayant été effectuées selon la norme NF T 46002.
Les modules x % correspondent à la contrainte mesurée à x % de déformation en traction.

| | VM1 | V1 |
|---|---|---|
| Module 100 % (MPa) | 2,9 | 3,2 |
| Module 300 % (MPa) | 17 | 18 |
| Déformation rupture (%) | 310 | 300 |
| Contrainte rupture (MPa) | 18 | 18 |

On constate que le vulcanisat VM1 selon l'invention présente un compromis de propriétés très satisfaisant, alors que sa préparation ne met pas en oeuvre d'étape de malaxage dans un mélangeur interne contrairement à celle du vulcanisat V1.

### EXEMPLE 5

a) On ajoute, à 347,6 g de la suspension S obtenue à l'issue de l'exemple 1, 1,2 g de dynasilane, c'est-à-dire de mercaptopropyltriéthoxysilane (agent de couplage charge/polymère commercialisé par la société Dégussa) ; le milieu obtenu est soumis à une agitation. La suspension ainsi préparée est référencée S2.
b) On mélange sous agitation 348,8 g de suspension S2 avec 349,0 g de solution E telle que préparée dans l'exemple 2.
c) Le produit obtenu est ensuite versé dans un récipient tel que l'on dispose d'une grande surface de contact avec l'air favorisant l'évaporation ; on laisse le solvant organique s'évaporer sous hotte pendant une nuit.

Les étapes a) à c) sont réalisées à température ambiante.

On obtient à l'issue de l'étape c) un mélange-maître référencé M2 contenant 50 parties en poids de silice de précipitation et 1,8 parties en poids d'agent de couplage dynasilane pour 100 parties en poids de SBR.

### EXEMPLE 6

On mélange dans un mélangeur à cylindre le mélange-maître M2 et les composés suivants (proportions indiquées en parties, en poids pour 151,8 parties, en poids de mélange-maître M2) :

| | |
|---|---|
| Diphénylguanidine | 1,4 |
| Acide stéarique | 1,1 |
| Oxyde de zinc | 1,8 |
| Sulfénamide ⁽¹⁾ | 1,3 |
| Soufre | 1,4 |

| | |
|---|---|
| ((1 ) : N-cyclohexyl-2-benzothiazyl sulfénamide) | |

Le mélange obtenu est ensuite vulcanisé à 170 °C pendant 40 minutes.

Le vulcanisat ainsi préparé est référencé VM2.

On mesure les propriétés mécaniques, en particulier les propriétés en traction (500 mm/min) , du vulcanisat VM2 préparé à partir du mélange-maître M2 sans utiliser une étape de malaxage dans un mélangeur interne

Ces propriétés sont exposées ci-après, les mesures (modules, déformation rupture, contrainte rupture) ayant été effectuées selon la norme NF T 46002.

Les modules x % correspondent à la contrainte mesurée à x % de déformation en traction.

| | VM2 |
|---|---|
| Module 100 % (MPa) | 2,8 |
| Module 300 % (MPa) | 12,6 |
| Déformation rupture (%) | 400 |
| Contrainte rupture (MPa) | 19 |

## Revendications

1. Procédé de préparation d'un mélange-maître à base d'au moins un polymère et de particules de silice de précipitation, dans lequel :
- on prépare une suspension de particules de silice de précipitation dans un solvant organique à partir d'une dispersion ou suspension aqueuse desdites particules de silice de précipitation, par transfert desdites particules de la phase aqueuse vers la phase organique à l'aide d'au moins un agent de transfert,
- on mélange au moins un polymère en solution dans un solvant organique avec ladite suspension de particules de silice de précipitation dans un solvant organique.

2. Procédé selon la revendication 1, **caractérisé en ce que**, après mélange, on élimine le(s)dit(s) solvant(s) organique(s).

3. Procédé selon la revendication 2; **caractérisé en ce qu'**on procède ensuite à une étape finale de mise en forme du solide obtenu.

4. Procédé selon l'une des revendications 1 à 3, **caractérisé en ce que**, après mélange, on recycle le(s)dit(s) solvant(s) organique(s) pour la préparation de la solution organique de polymère et/ou pour la préparation de la suspension organique de particules de silice de précipitation.

5. Procédé selon l'une des revendications 1 à 4, **caractérisé en ce que** le solvant organique dans lequel le polymère est en solution est identique au solvant organique dans lequel les particules de silice de précipitation sont en suspension.

6. Procédé selon l'une des revendications 1 à 5, **caractérisé en ce que** la solution organique de polymère est issue de la dissolution du polymère solide dans un solvant organique ou est issue de la polymérisation des monomères correspondants dans un solvant organique.

7. Procédé selon l'une des revendications 1 à 6, **caractérisé en ce que** ledit polymère présente au moins une température de transition vitreuse comprise entre -150 et +300 °C, en particulier entre -150 et +20 °C.

8. Procédé selon l'une des revendications 1 à 7, **caractérisé en ce que** ledit polymère est un polymère diénique, de préférence un élastomère diénique.

9. Procédé selon l'une des revendications 1 à 7, **caractérisé en ce que** ledit polymère est choisi parmi le caoutchouc naturel, les polymères dérivant de monomères aliphatiques ou aromatiques, comprenant au moins une insaturation, le polyacrylate de butyle, les élastomères silicones, les élastomères thermoplastiques, les élastomères fonctionnalisés, les polymères halogénés et leurs mélanges.

10. Procédé selon l'une des revendications 1 à 7, **caractérisé en ce que** ledit polymère est choisi parmi le SBR, le BR, l'EPDM.

11. Procédé selon l'une des revendications 1 à 10, **caractérisé en ce que** l'on met en oeuvre deux polymères différents.

12. Procédé selon l'une des revendications 1 à 11, **caractérisé en ce que**, préalablement au mélange avec la solution organique de polymère, on ajoute à la suspension organique de particules de silice de précipitation au moins un produit organique apportant une fonctionnalité auxdites particules de silice de précipitation.

13. Procédé selon la revendication 12, **caractérisé en ce que**, préalablement au mélange avec la solution organique de polymère, on ajoute à la suspension organique de particules de silice de précipitation au moins un agent de couplage, un agent de recouvrement et/ou un agent anti-oxydant.

14. Procédé selon l'une des revendications 1 à 13, **caractérisé en ce que** la suspension de particules de silice de précipitation dans un solvant organique est préparée comme suit :
a) on mélange, à une dispersion ou suspension aqueuse de particules de silice de précipitation, un solvant organique non-miscible à l'eau et un agent de transfert, soluble partiellement ou totalement dans ledit solvant organique, ledit agent de transfert étant ajouté de manière à diminuer l'hydrophilie desdites particules de silice de précipitation et à provoquer leur transfert dans ledit solvant organique,
b) on sépare le solvant organique contenant lesdites particules de silice de précipitation, de la phase aqueuse.

15. Procédé selon l'une des revendications 1 à 14, **caractérisé en ce que** ladite dispersion ou suspension aqueuse de particules de silice de précipitation présente un pH compris entre 3 et 11.

16. Procédé selon l'une des revendications 14 et 15, **caractérisé en ce que** ledit agent de transfert est un tensioactif.

17. Procédé selon l'une des revendications 14 à 16, **caractérisé en ce que** ledit agent de transfert est un tensioactif ionique.

18. Procédé selon la revendication 17, **caractérisé en ce que** ledit agent de transfert est un tensioactif cationique ou anionique.

19. Procédé selon la revendication 18, **caractérisé en ce que** ledit agent de transfert est une amine quaternaire ou un sel d'amine quaternaire.

20. Procédé selon l'une des revendications 14 à 16, **caractérisé en ce que** ledit agent de transfert est un tensioactif non ionique.

21. Procédé selon l'une des revendications 1 à 20; **caractérisé en ce que** le(s)dit(s) solvant(s) organique(s) est (sont) choisi(s) parmi les hydrocarbures aromatiques et les hydrocarbures aliphatiques éventuellement substitués.

22. Procédé selon la revendication 21, **caractérisé en ce que** le(s)dit(s) solvant(s) organique(s) est (sont) choisis parmi le xylène, le benzène et le toluène.

23. Procédé selon l'une des revendications 1 à 20, **caractérisé en ce que** la dispersion ou suspension aqueuse de silice de précipitation mise en oeuvre a été obtenue au cours du procédé de préparation de ladite silice, le pH de ladite suspension ayant été éventuellement ensuite ajusté à une valeur comprise entre 7,5 et 10,5, en particulier entre 8 et 10.

24. Procédé selon la revendication 23, **caractérisé en ce que** ladite silice de précipitation a subi une cationisation, de préférence à l'aide d'un dopage à l'aluminium.

25. Procédé selon la revendication 24, **caractérisé en ce que** la dispersion ou suspension aqueuse de silice de précipitation mise en oeuvre a été obtenue au cours du procédé de préparation de ladite silice, le pH de ladite suspension ayant été éventuellement ensuite ajusté à une valeur comprise entre 3 et 5.

26. Procédé selon l'une des revendications 23 et 25, **caractérisé en ce que** ladite dispersion ou suspension aqueuse de silice de précipitation a été obtenue sans mettre en oeuvre d'étape de lavage et/ou de filtration.

## Claims

1. Method for preparing a masterbatch based on at least one polymer and on precipitated silica particles, wherein :
- a suspension of precipitated silica particles in an organic solvent is prepared from an aqueous dispersion or suspension of the said precipitated silica particles, by transferring the said particles from the aqueous phase to the organic phase by means of at least one transfer agent,
- at least one polymer in solution in an organic solvent is mixed with the said suspension of precipitated silica particles in an organic solvent.

2. Method according to Claim 1, **characterized in that**, after mixing, the said organic solvent(s) is (are) removed.

3. Method according to Claim 2, **characterized in that** a final forming step is then carried out on the solid obtained.

4. Method according to one of Claims 1 to 3, **characterized in that**, after mixing, the said organic solvent(s) is (are) recycled for the preparation of the organic polymer solution and/or for the preparation of the organic suspension of precipitated silica particles.

5. Method according to one of Claims 1 to 4, **characterized in that** the organic solvent in which the polymer is in solution is identical to the organic solvent in which the precipitated silica particles are in suspension.

6. Method according to one of Claims 1 to 5, **characterized in that** the organic polymer solution comes from dissolving the solid polymer in an organic solvent or comes from polymerizing the corresponding monomers in an organic solvent.

7. Method according to one of Claims 1 to 6, **characterized in that** the said polymer has at least a glass transition temperature ranging from -150 °C to +300 °C, in particular from -150 °C to +20 °C.

8. Method according to one of Claims 1 to 7, **characterized in that** the said polymer is a diene polymer, preferably a diene elastomer.

9. Method according to one of Claims 1 to 7, **characterized in that** the said polymer is chosen from natural rubber, polymers deriving from aliphatic or aromatic monomers containing at least one unsaturated group, polybutyl acrylate, silicone elastomers, thermoplastic elastomers, functionalized elastomers, halogenated polymers and blends thereof.

10. Method according to one of Claims 1 to 7, **characterized in that** the said polymer is chosen from SBR, BR, EPDM.

11. Method according to one of Claims 1 to 10, **characterized in that** two different polymers are used.

12. Method according to one of Claims 1 to 11, **characterized in that** at least one organic product providing the said precipitated silica particles with a functionality is added to the organic suspension of precipitated silica particles, before mixing with the organic polymer solution.

13. Method according to Claim 12, **characterized in that** at least one coupling agent, at least one coating agent and/or at least one antioxidant are added to the organic suspension of precipitated silica particles, before mixing with the organic polymer solution.

14. Method according to one of Claims 1 to 13, **characterized in that** the suspension of precipitated silica particles in an organic solvent is prepared as follows:
a) a water-immiscible organic solvent and a transfer agent, which is partially or completely soluble in the said organic solvent, are mixed with an aqueous dispersion or suspension of precipitated silica particles, the said transfer agent being added so as to reduce the hydrophilicity of the said precipitated silica particles and to make them transfer into the said organic solvent;
b) the organic solvent containing the said precipitated silica particles is separated from the aqueous phase.

15. Method according to one of Claims 1 to 14, **characterized in that** the said aqueous dispersion or suspension of precipitated silica particles has a pH of between 3 and 11.

16. Method according to either of Claims 14 and 15, **characterized in that** the said transfer agent is a surfactant.

17. Method according to one of Claims 14 to 16, **characterized in that** the said transfer agent is an ionic surfactant.

18. Method according to Claim 17, **characterized in that** the said transfer agent is a cationic or anionic surfactant.

19. Method according to Claim 18, **characterized in that** the said transfer agent is a quaternary amine or a quaternary amine salt.

20. Method according to one of Claims 14 to 16, **characterized in that** the said transfer agent is a nonionic surfactant.

21. Method according to one of Claims 1 to 20, **characterized in that** the said organic solvent(s) is (are) chosen from aromatic hydrocarbons and aliphatic hydrocarbons which may be substituted.

22. Method according to Claim 21, **characterized in that** the said organic solvent(s) is (are) chosen from xylene, benzene and toluene.

23. Method according to one of Claims 1 to 20, **characterized in that** the aqueous dispersion or suspension of precipitated silica used was obtained during the process for preparing the said silica, the pH of the said suspension then possibly having been adjusted to a value of between 7.5 and 10.5, particularly between 8 and 10.

24. Method according to Claim 23, **characterized in that** the said precipitated silica has undergone a cationization treatment, preferably by doping it with aluminium.

25. Method according to Claim 24, **characterized in that** the aqueous dispersion or suspension of precipitated silica used was obtained during the process for preparing the said silica, the pH of the said suspension then possibly having been adjusted to a value of between 3 and 5.

26. Method according to either of Claims 23 and 25, **characterized in that** the said aqueous dispersion or suspension of precipitated silica was obtained without using a washing and/or filtration step.

## Patentansprüche

1. Verfahren zur Herstellung einer Vormischung (Masterbatch) auf Basis wenigstens eines Polymers und von Partikeln ausgefällter Kieselerde, in dem:
- eine Suspension von Partikeln ausgefällter Kieselerde in einer organischen Lösung aus einer wässrigen Dispersion oder Suspension dieser Partikel ausgefällter Kieselerde zubereitet wird durch Überführung dieser Partikel von der wässrigen Phase in die organische Phase mittels eines Transfermittels,
- wenigstens ein Polymer in Lösung in einem organischen Lösungsmittel mit dieser Suspension von Partikeln ausgefällter Kieselerde in einem organischen Lösungsmittel gemischt wird.

2. Verfahren gemäß Anspruch 1, **dadurch gekennzeichnet, dass** nach dem Mischen diese(s) organische(n) Lösungsmittel eliminiert wird/werden.

3. Verfahren gemäß Anspruch 2, **dadurch gekennzeichnet, dass** daraufhin mit einem letzten Schritt fortgefahren wird, in welchem der erhaltene Festkörper aufbereitet wird.

4. Verfahren gemäß einem der Ansprüche 1 bis 3, **dadurch gekennzeichnet, dass** nach dem Mischen diese(s) organische(n) Lösungsmittel für die Zubereitung der organischen Lösung des Polymers und/oder für die Zubereitung der organischen Suspension von Partikeln ausgefällter Kieselerde recycelt wird/werden.

5. Verfahren gemäß einem der Ansprüche 1 bis 4, **dadurch gekennzeichnet, dass** das organische Lösungsmittel, in welchem das Polymer gelöst ist, identisch ist mit dem organischen Lösungsmittel, in welchem die Partikel ausgefällter Kieselerde suspendiert sind.

6. Verfahren gemäß einem der Ansprüche 1 bis 5, **dadurch gekennzeichnet, dass** die organische Lösung des Polymers aus der Auflösung des festen Polymers in einem organischen Lösungsmittel hervorgegangen ist oder aus der Polymerisation entsprechender Monomere in einem organischen Lösungsmittel hervorgegangen ist.

7. Verfahren gemäß einem der Ansprüche 1 bis 6, **dadurch gekennzeichnet, dass** dieses Polymer wenigstens eine Glasübergangstemperatur zwischen -150 und +300 °C, insbesondere zwischen -150 und +20 °C, aufweist.

8. Verfahren gemäß einem der Ansprüche 1 bis 7, **dadurch gekennzeichnet, dass** dieses Polymer ein Dienpolymer, vorzugsweise ein Dienelastomer, ist.

9. Verfahren gemäß einem der Ansprüche 1 bis 7, **dadurch gekennzeichnet, dass** dieses Polymer ausgewählt ist aus natürlichem Kautschuk, Polymeren, welche von aliphatischen oder aromatischen Monomeren abstammen, die wenigstens einfach ungesättigt sind, Polybutylacrylat, Silikonelastomeren, thermoplastischen Elastomeren, funktionalisierten Elastomeren, halogenierten Polymeren oder deren Mischungen.

10. Verfahren gemäß einem der Ansprüche 1 bis 7, **dadurch gekennzeichnet, dass** dieses Polymer ausgewählt ist aus SBR, BR, EPDM.

11. Verfahren gemäß einem der Ansprüche 1 bis 10, **dadurch gekennzeichnet, dass** zwei unterschiedliche Polymere verwendet werden.

12. Verfahren gemäß einem der Ansprüche 1 bis 11, **dadurch gekennzeichnet, dass** vor dem Mischen mit der organischen Lösung des Polymers, der organischen Suspension von Partikeln ausgefällter Kieselerde wenigstens ein organisches Produkt zugegeben wird, welches den Partikeln ausgefällter Kieselerde eine Funktionalität verleiht.

13. Verfahren gemäß Anspruch 12, **dadurch gekennzeichnet, dass** vor dem Mischen mit der organischen Lösung des Polymers der organischen Suspension von Partikeln ausgefällter Kieselerde wenigstens ein Verbindungsmittel, ein Überzugsmittel und/oder ein Antioxidationsmittel zugegeben wird.

14. Verfahren gemäß einem der Ansprüche 1 bis 13, **dadurch gekennzeichnet, dass** die Suspension von Partikeln ausgefällter Kieselerde in einem organischen Lösungsmittel wie folgt zubereitet wird:
a) einer wässrigen Dispersion oder Suspension von Partikeln ausgefällter Kieselerde wird ein organisches Lösungsmittel, welches nicht mit Wasser mischbar ist, und ein Transfermittel, welches teilweise oder vollständig in dem besagten organischen Lösungsmittel lösbar ist, beigemischt, wobei dieses Transfermittel so zugegeben wird, dass die Hydrophilie dieser Partikel ausgefällter Kieselerde verringert wird und ihre Überführung in das organische Lösungsmittel bewirkt wird,
b) das organische Lösungsmittel, welches diese Partikel ausgefällter Kieselerde enthält, wird von der wässrigen Phase getrennt.

15. Verfahren gemäß einem der Ansprüche 1 bis 14, **dadurch gekennzeichnet, dass** diese wässrige Dispersion oder Suspension von Partikeln ausgefällter Kieselerde einen pH-Wert zwischen 3 und 11 aufweist.

16. Verfahren gemäß einem der Ansprüche 14 und 15, **dadurch gekennzeichnet, dass** dieses Transfermittel ein Tensid ist.

17. Verfahren gemäß einem der Ansprüche 14 bis 16, **dadurch gekennzeichnet, dass** dieses Transfermittel ein ionisches Tensid ist.

18. Verfahren gemäß Anspruch 17, **dadurch gekennzeichnet, dass** dieses Transfermittel ein kationisches oder anionisches Tensid ist.

19. Verfahren gemäß Anspruch 18, **dadurch gekennzeichnet, dass** dieses Transfermittel ein quartäres Amin oder ein quartäres Ammoniumsalz ist.

20. Verfahren gemäß einem der Ansprüche 14 bis 16, **dadurch gekennzeichnet, dass** dieses Transfermittel ein nicht-ionisches Tensid ist.

21. Verfahren gemäß einem der Ansprüche 1 bis 20, **dadurch gekennzeichnet, dass** diese(s) organische(n) Lösungsmittel ausgewählt ist/sind aus aromatischen Kohlenwasserstoffen und aliphatischen Kohlenwasserstoffen, die gegebenenfalls substituiert sind.

22. Verfahren gemäß Anspruch 21, **dadurch gekennzeichnet, dass** diese(s) organische(n) Lösungsmittel ausgewählt ist/sind aus Xylol, Benzol und Toluol.

23. Verfahren gemäß einem der Ansprüche 1 bis 20, **dadurch gekennzeichnet, dass** die verwendete wässrige Dispersion oder Suspension von ausgefällter Kieselerde im Laufe des Zubereitungsverfahrens dieser Kieselerde erhalten wurde, wobei der pH-Wert dieser Suspension danach gegebenenfalls auf einen Wert zwischen 7,5 und 10,5, insbesondere zwischen 8 und 10, angepasst wurde.

24. Verfahren gemäß Anspruch 23, **dadurch gekennzeichnet, dass** diese ausgefällte Kieselerde einer Kationisierung unterzogen wird, vorzugsweise durch Dotierung mit Aluminium.

25. Verfahren gemäß Anspruch 24, **dadurch gekennzeichnet, dass** die verwendete wässrige Dispersion oder Suspension von ausgefällter Kieselerde im Laufe des Zubereitungsverfahrens dieser Kieselerde erhalten wurde, wobei der pH-Wert dieser Suspension danach gegebenenfalls auf einen Wert zwischen 3 und 5 angepasst wurde.

26. Verfahren gemäß einem der Ansprüche 23 und 25, **dadurch gekennzeichnet, dass** diese wässrige Dispersion oder Suspension von ausgefällter Kieselerde ohne Durchführung eines Schritts des Waschens und/oder des Filterns erhalten wurde.
